# EUROPEAN PATENT APPLICATION

(11) **EP 2 696 242 A2**
(43) Date of publication of application: **12.02.2014**
(21) Application number: 13166548.1
(22) Date of filing: 03.05.2013
(51) Int. Cl.: G03B 21/56

(54) **Projection apparatus including integrated image projection unit and screen unit**

(30) Priority: 10.08.2012 KR 20120087907
(71) Applicant: Samsung Electronics Co., Ltd, Gyeonggi-do 443-742 (KR)
(72) Inventor: Lim, Jae-geun, Gyeonggi-do (KR); Kim, Hak-young, Gyeonggi-do (KR); Park, Jun-seok, Gyeonggi-do (KR); Hur, Jean, Gyeonggi-do (KR)
(74) Representative: Hewett, Jonathan Michael Richard

(57) **Abstract**

A projection apparatus, in which an image projection unit and a screen unit are integrally mounted on one mounting unit, is provided. The screen unit includes a screen configured to display an image, and a screen attaching part to which the screen is attached. The screen attaching part includes a front plate to which the screen is attached, a rear plate, and a strength reinforcing member interposed between the front plate and the rear plate.

## Description

The present invention relates to a projection apparatus, and more particularly, to a projection apparatus including an integrated image projection unit and screen unit.

In general, projection apparatuses include an image projection unit configured to project an image and a screen configured to display the projected image, which are separated from each other. When the image projection unit is separated from the screen, the screen is fixed to a frame and hung on the wall or fixed to additional storage furniture and the image projection unit is disposed in additional storage furniture in front of the screen. In a projection apparatus in the related art, a structure such as a plate attached to the screen is mounted to prevent the screen from being bent.

Since there is no connecting structure which controls a position between the image projection unit and the screen in the projection apparatus of the related art, in which the image projection unit is separated from the screen, the screen adjustment is performed in advance whenever the projection apparatus is driven.

In the projection apparatus of the related art, when the screen is increased in a size, the thickness of the structure attached to prevent bending of the screen is inevitably increased and thus a weight of the structure is increased.

Further, in the projection apparatus of the related art, since the image projection unit is separated from the screen, the projection apparatus can not give a user an awareness in which the image projection unit and the screen are one set.

One or more exemplary embodiments of the present invention provide a projection apparatus which is thin and lightweight and includes an integrated image projection unit and screen.

According to an aspect of an exemplary embodiment, there is provided a projection apparatus including: an image projection unit configured to project an image; a screen unit including a screen configured to display the image projected by the image projection unit, and a screen attaching part to which the screen is attached; and a mounting unit on which the image projection unit and screen unit are integrally mounted as unitary structure, wherein the screen attaching part includes: a front plate to which the screen is attached; a rear plate; and a strength reinforcing member interposed between the front plate and the rear plate.

The strength reinforcing member may have a honeycomb shape in which a plurality of cells are formed.

Each of the plurality of cells may have a hexagonal pillar shape.

The strength reinforcing member may have a wave shape.

The strength reinforcing member may have an egg plate shape.

The mounting unit may include a base frame, a mounting bracket provided inside the base frame and on which the image projection unit and the screen unit are mounted, and a cover frame covering the base frame.

The mounting bracket may include a first mounting part on which the image projection unit is mounted and a second mounting part on which the screen unit is mounted.

The second mounting part may be disposed to be perpendicular to the first mounting part.

The screen unit may be adhered to the second mounting part in a rear surface of the rear plate through an adhesive.

The screen may be a curved screen.

The curved screen may be curved in at least one direction of a horizontal direction and a vertical direction.

The screen may be adhered to the screen attaching part in a laminating manner.

The strength reinforcing member may be fabricated of aluminum.

According to another aspect of an exemplary embodiment, there is provided a screen unit which includes: a screen configured to display a projected image; and a screen attaching part to which the screen is attached. The screen attaching part may include a front plate to which the screen is attached; a rear plate; and a strength reinforcing member interposed between the front plate and the rear plate.

The strength reinforcing member may have a honeycomb shape in which a plurality of cells are formed.

Each of the plurality of cells may have a hexagonal pillar shape.

The above and/or other aspects will be more apparent by describing in detail exemplary embodiments, with reference to the accompanying drawings, in which:
FIG. 1 is a perspective view schematically illustrating a projection apparatus according to an exemplary embodiment;
FIG. 2 is an exploded perspective view schematically illustrating the projection apparatus of FIG. 1;
FIG. 3 is an exploded perspective view schematically illustrating a screen unit provided in the projection apparatus of FIG. 2;
FIG. 4 is an exploded perspective view schematically illustrating a screen attaching part provided in the screen unit of FIG. 3;
FIG. 5 is a perspective view schematically illustrating a strength reinforcing member provided in the screen attaching part of FIG. 4 according to an exemplary embodiment;
FIG. 6 is a perspective view schematically illustrating a strength reinforcing member provided in the screen attaching part of FIG. 4 according to another exemplary embodiment;
FIG. 7 is a perspective view schematically illustrating a mounting bracket provided in the projection apparatus of FIG. 2;
FIGS. 8 and 9 are views an image projection unit and a screen unit mounted on the mounting bracket of FIG. 7;
FIG. 10 is a view schematically illustrating a base frame on which the mounting bracket of FIGS. 8 and 9 is to be mounted; and
FIG. 11 is a cross-sectional view schematically illustrating the projection apparatus of FIG. 1.

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

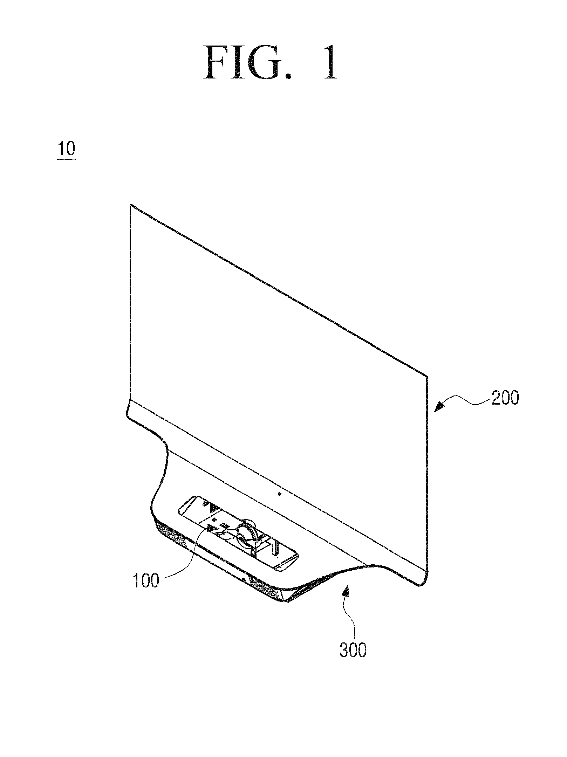

FIG. 1 is a perspective view schematically illustrating a projection apparatus according to an exemplary embodiment.

Referring to FIG. 1, a projection apparatus 10 includes an image projection unit 100, a screen unit 200, and a mounting unit 300.

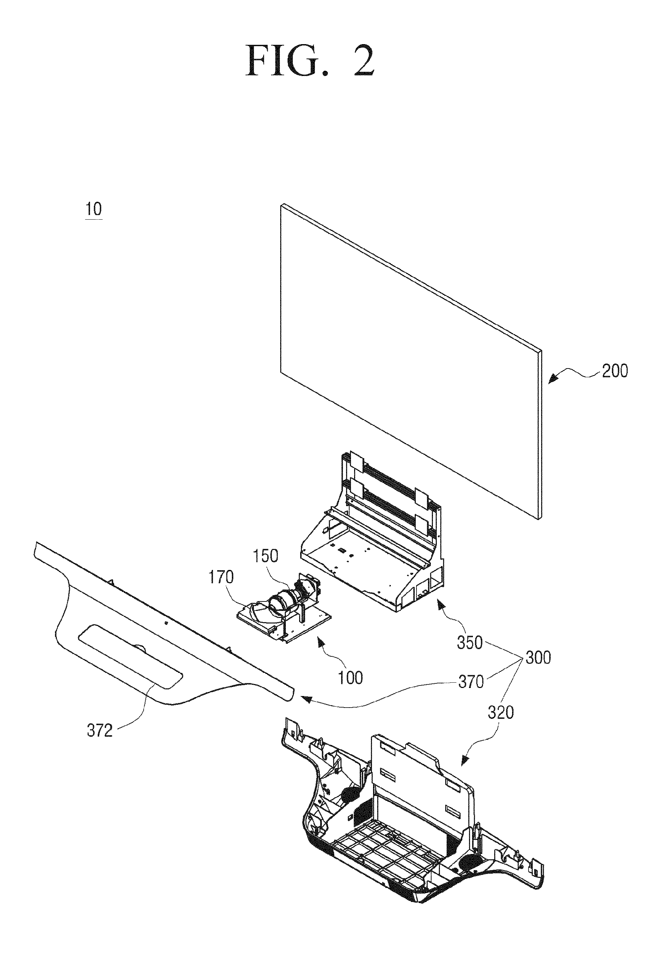

The image projection unit 100 includes an optical system configured to form, magnify, and project an image. The image projection unit 100 will be described later with reference to FIG. 2.

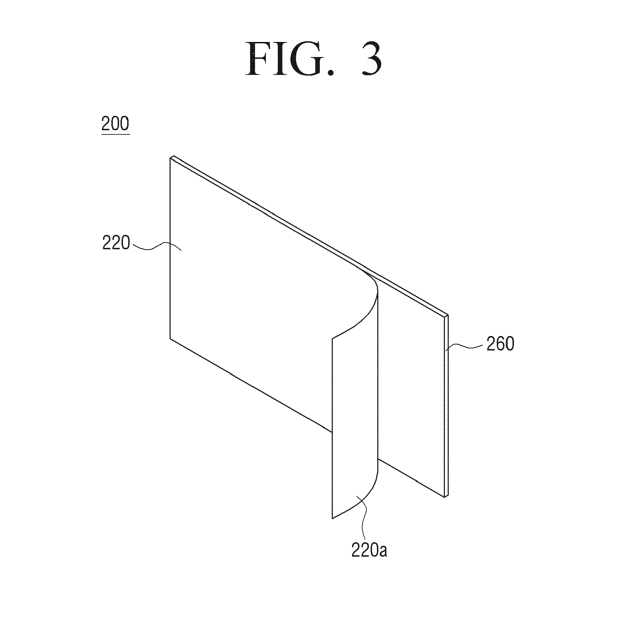

The screen unit 200 displays an image projected from the image projection unit 100. The screen unit 200 may be integrally mounted with the image projection unit 100 on the projection apparatus 10. The screen unit 200 will be described later with reference to FIGS. 3 to 6.

The mounting unit 300 forms an exterior appearance of the projection apparatus 10 and the image projection unit 100 and the screen unit 200 are mounted on the mounting unit 300. The projection apparatus 10 according to the exemplary embodiment may give a user an awareness in which the projection apparatus 10 is a single unitary set since the image processing unit 100 and the screen unit 200 are included together in one mounting unit 300.

Various types of circuit boards (not shown) configured to drive or control the image projection unit and a cooling system (not shown) configured to cool internal parts, are further mounted on the mounting unit 300.

FIG. 2 is an exploded perspective view schematically illustrating the projection apparatus of FIG. 1.

Referring to FIG. 2, as described above, the image projection unit 100 includes the optical system. The optical system includes a lighting unit (not shown), an image forming unit (not shown), a projection lens unit 150, and an aspheric mirror 170.

The light unit generates light for forming the image. The lighting unit includes a red (R) light emitting device (LED), a blue (B) LED, and a green (G) LED which generates R light, B light, and G light, respectively, as a light source.

In the above-described exemplary embodiment, the lighting unit includes three light emitting diodes (LEDs) as a light source. However, in other exemplary embodiments, the lighting unit may include other types of light sources such as a lamp (for example, an arc lamp, a halogen lamp, and the like) which generates white light.

The image forming unit may include a digital micro-mirror device (DMD) panel. The DMD panel includes a large number of micro-mirrors and each of the micro-mirrors corresponds to each of image pixels. An image is formed from the light generated by the lighting unit through an on-off operation of the micro-mirrors according to image signals. The image projection unit includes at least one reflection mirror (not shown) which reflects the white light generated by the lighting unit to the image forming device.

The projection lens unit 150 magnifies and projects the image formed by the image forming device toward the aspheric mirror 170. A plurality of projection lenses (not shown), which magnify the image, are provided in the projection lens unit 150.

The aspheric mirror 170 displays the image magnified and projected by the projection lens unit 150 on the screen unit 200 through an opening 372 provided in a cover frame 370. Since the image projection unit 100 in the exemplary embodiment displays the image through the aspheric mirror 170, a distance between the image projection unit 100 and the screen unit 200 may be closer as compared to other cases.

Therefore, in the projection apparatus 10 according to the exemplary embodiment, the image projection unit 100 and the screen unit 200 are disposed close to each other in the mounting unit 300 to obtain a slim apparatus.

The mounting unit 300 includes a base frame 320, a mounting bracket 350, and the cover frame 370.

The base frame 320 contains the mounting bracket 350 and is coupled with the cover frame 370 to form an exterior appearance of the projection apparatus 10. An exterior appearance of the base frame 320 may be suitably changed according to shapes or sizes of the image projection unit 100 and the screen unit 200.

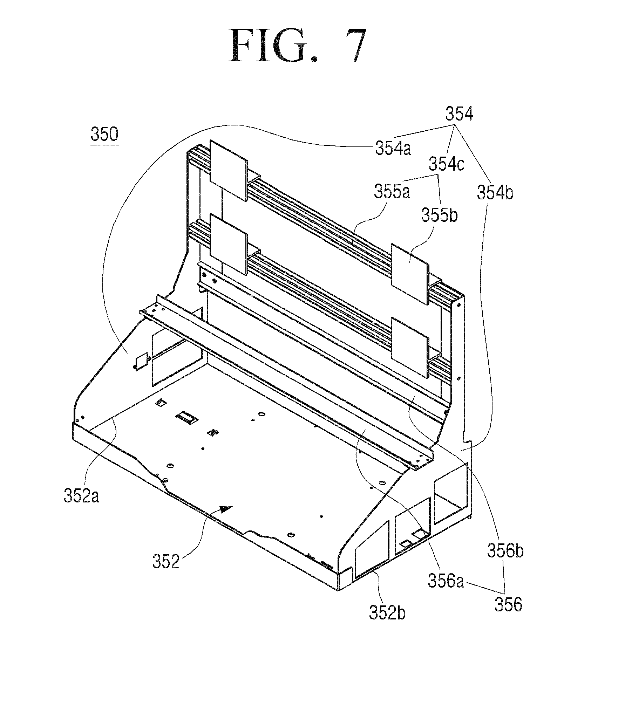

The mounting bracket 350 is mounted on the base frame 320. The image projection unit 100 and the screen unit 200 are mounted on the mounting bracket 350 so that the image projection unit 100 and the screen unit 200 are integrally formed in the projection apparatus 10. The mounting bracket 350 will be described later with reference to FIG. 7.

The cover frame 370 covers the base frame 320 and forms a portion of the exterior appearance of the projection apparatus 10 together with the base frame 320. The opening 372 is formed in the cover frame 370 to project the image from the image projection unit 100 to the screen unit 200.

The base frame 320, mounting bracket 350, and cover frame 370 may be fabricated of Zn-coated carbon steel plate (SECC). The material for the base frame 320, mounting bracket 350, and cover frame 370 may be suitably changed according to the design thereof.

FIG. 3 is an exploded perspective view schematically illustrating the screen unit provided in the projection apparatus of FIG. 2.

Referring to FIG. 3, the screen unit 200 includes a screen 220 and a screen attaching part 260.

The screen 220 displays an image to the outside and the user can watch the desired image through the screen 220. The screen 220 may be fabricated of fiber glass, a polyethylene (PE) film, and the like, but is not limited thereto. A specific embossing process may be performed on a surface of the screen 220 to implement a three-dimensional (3D) image.

The screen 220 may be a flat screen or a curved screen. When the screen is the curved screen, the immersion of the user for watching the image can be increased. The curved screen may be formed concavely in a horizontal direction or formed curvedly in a vertical direction. Alternatively, the curved screen may be formed curvedly in every direction. In this case, the screen has a spherical surface and thus the immersion of the user for the image can be further increased.

The screen attaching part 260 is attached to a rear surface 220a of the screen 220 to support the screen 220. The screen attaching part 260 supports the screen 220 and prevents one surface of the screen 220 from being bent. The bending of the screen 220 can cause the image displayed through the screen 220 to be distorted. In the projection apparatus 10 according to the exemplary embodiment, the screen 220 is attached to the screen attaching part 260 to be in contact with, and to be supported by, the screen attaching part 260 so that the screen is not bent.

Here, the screen 220 may be attached to the screen attaching part 260 through a contact method and a laminating method may be used as the contact method. However, the contact method is not limited thereto and the screen 220 may be attached using other methods in which the screen 220 is in contact with the screen attaching part 260 and supported by the screen attaching part 260.

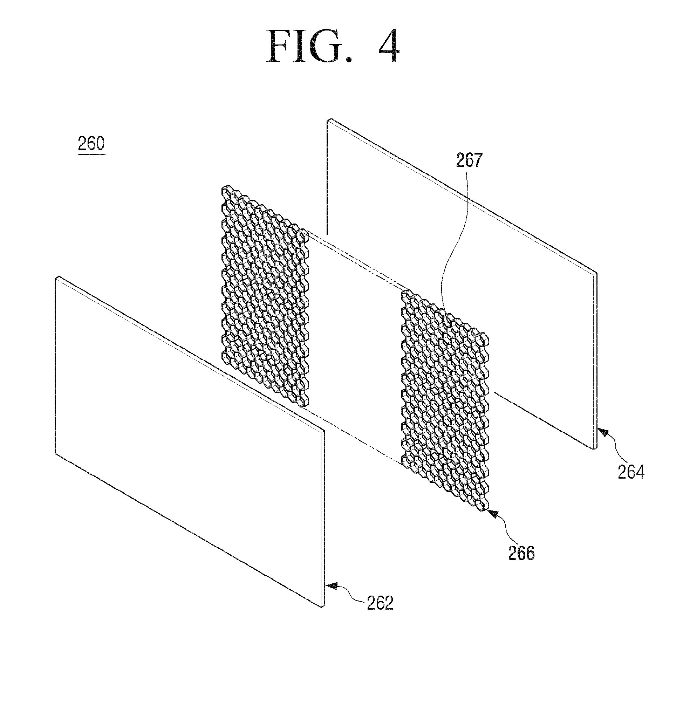

FIG. 4 is an exploded perspective view schematically illustrating the screen attaching part provided in the screen unit of FIG. 3.

Referring to FIG. 4, the screen attaching part 260 includes a front plate 262, a rear plate 264, and a strength reinforcing member 266.

The front plate 262 and the rear plate 264 are coupled and mounted so that the strength reinforcing member 266 is disposed therebetween. The screen 220 described above is attached to the front plate 262 and the mounting bracket 350, to be described later, is mounted on the rear plate 264.

The strength reinforcing member 266 reinforces the strength of the screen attaching part 260 to maintain flatness of the screen attaching part 260 without increasing a thickness of the screen attaching part 260. Even when the screen 220 has a large size, the flatness of the screen 220 attached to the screen attaching part 260 can also be maintained through the strength reinforcing member 266.

The strength reinforcing member 266 is disposed between the front plate 262 and the rear plate 264. The strength reinforcing member 266 may be attached to the front plate 262 and the rear plate 264, for example, by an adhesive such as a hot melt adhesive, but is not limited thereto. The strength reinforcing member 266 may include a plurality of cells 267 and each of the plurality of cells 267 may have a hexagonal pillar shape.

Therefore, the strength reinforcing member 266 has a honeycomb shape as a whole. In other exemplary embodiments, the cell 267 may have various types of shapes, for example, other pillar shapes (for example, a square pillar shape), a cylindrical shape, or the like.

The strength reinforcing member 266 is fabricated of high-strength aluminium (Al). However, the material for the strength reinforcing member 266 is not limited thereto and the strength reinforcing member 266 may be fabricated of other metal materials or non-metal materials (for example, plastic).

In addition to the strength reinforcing member 266, the front plate 262 and the rear plate 264 constituting the screen attaching part 260 are also fabricated of high-strength aluminium (Al). However, the material for the front plate 262 and the rear plate 264 is not limited thereto, and the front plate 262 and the rear plate 264 may be fabricated of other metal materials or non-metal materials (for example, plastic).

The strength reinforcing member 266 having the honeycomb shape is mounted between the front plate 262 and the rear plate 264 of the screen attaching part 260 to reinforce the strength of the screen attaching part 260.

Therefore, deformation of the screen attaching part 260 can be minimized due to self-weight, external force, and heat and therefore the flatness of the screen attaching part 260 can be maintained. Accordingly, degradation of quality in the displayed image can be prevented by the curve generated in the screen 220 due to the deformation of the screen attaching part 260.

Further, the strength reinforcing member 266 having the honeycomb shape can cause the thickness of the screen attaching part 260 to be reduced and therefore cause a bezel in the screen unit 200 to be thin and the screen unit 200 to be lighter in a total weight.

The projection apparatus 10 according to the exemplary embodiment can implement a product, which is lightweight and slim, through the thin bezel of the screen unit 200 and the light-weight screen unit.

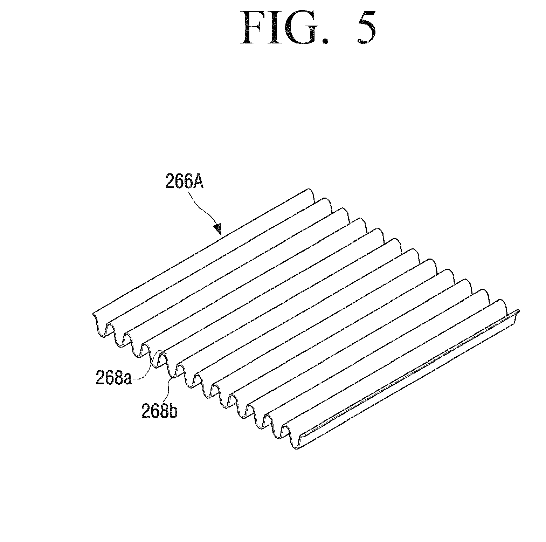

FIG. 5 is a perspective view schematically illustrating a strength reinforcing member provided in the screen attaching part of FIG. 4 according to an exemplary embodiment.

Referring to FIG. 5, an exemplary strength reinforcing 266A has a wave or corrugated shape. Specifically, the strength reinforcing member 266A has a structure in which a convex portion 268a and a concave portion 268b are alternately repeated. Here, the convex portion 268a and the concave portion 268b extend along a width direction or length direction of the strength reinforcing member 266A. That is, one concave portion 268b is arranged between two convex portions 268a and one convex portion 268a is arranged between two concave portions 268b.

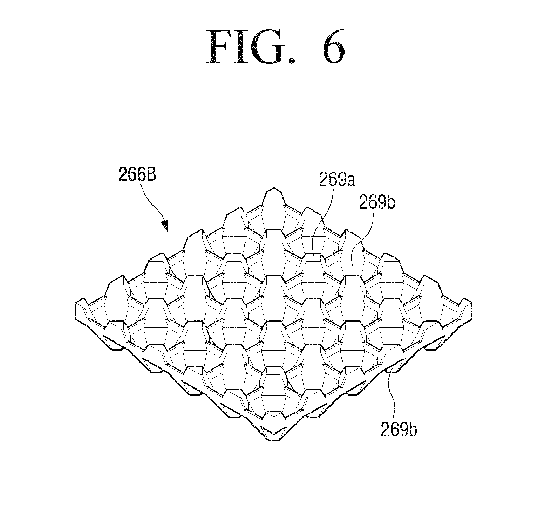

FIG. 6 is a perspective view schematically illustrating a strength reinforcing member provided in the screen attaching part of FIG. 4 according to another exemplary embodiment.

Referring to FIG. 6, another exemplary strength reinforcing member 266B has an egg carton formation. Specifically, the strength reinforcing member 266B includes a plurality of convex portions 269a and a plurality of concave portions 269b which are regularly repeated, and has a structure in which one concave portion 269b is arranged among four convex portions 269a and one convex portion 269a is arranged among four concave portions 269b.

In the exemplary embodiments, only three types of strength reinforcing members 266, 268A, and 268B having different shapes from each other have been illustrated, but other shapes of strength reinforcing members, which can contribute to improve the strength and reduce the weight of the screen unit 200, may be applicable to the invention.

FIG. 7 is a perspective view schematically illustrating a mounting bracket provided in the projection apparatus of FIG. 2.

Referring to FIG. 7, the mounting bracket 350 includes a first mounting part 352 and a second mounting part 354.

The first mounting part 352 has a rectangular plate shape and the image projection unit 100 is mounted on the first mounting part 352. The second mounting part 354 extends from the first mounting part 352 and is formed to be perpendicular to the first mounting part 352.

The second mounting part 354 includes a first vertical portion 354a, a second vertical portion 354b, and a connection portion 354c.

The first vertical portion 354a is formed to vertically extend from one edge 352a of the first mounting part 352. The first vertical portion 354a substantially has an L-shape.

The second vertical portion 354b is formed to vertically extend from the other edge 352b of the first mounting part 352. The second vertical portion 354b substantially has an L-shape like the first vertical portion 354a.

The connection portion 354c includes a connection member 355a and a mounting plate 355b.

At least one connection member 355a may be provided, and the exemplary embodiment illustrates that two connection members 355a are provided. The two connection members 355a are disposed parallel to each other in a vertical direction.

The connection member 355a has an elongated bar shape and is coupled to the first vertical portion 354a and the second vertical portion 354b.

The mounting plate 355b is used to mount the screen unit 200 and provided in each of connection members 355a. At least one mounting plate 355b may be provided and the exemplary embodiment illustrates that two plates 355b are provided in one connection member 355a. That is, in the exemplary embodiment, total four mounting plates 355b are provided.

The two mounting plates 355b provided in one connection member 355a are disposed to be spaced from each other at intervals in a horizontal direction. Each of the mounting plates 355b has a square plate shape. However, the shape of the mounting plate 355b is not limited thereto and any shape, which can mount the screen unit 200, is applicable to the invention.

The mounting bracket 350 may further include a reinforcing part 356.

The reinforcing part 356 is used to prevent the second mounting part 354 from being twisted or deformed and is connected to the first vertical portion 354a and the second vertical portion 354b. At least one reinforcing part 356 may be provided and the exemplary embodiment illustrates that two reinforcing parts 356a and 356b are provided to connect the first vertical portion 354a and the second vertical portion 354b. The reinforcing part 356 may have a rectangular bar shape. However, the shape of the reinforcing part 356 is not limited thereto and may be suitably modified according to the design.

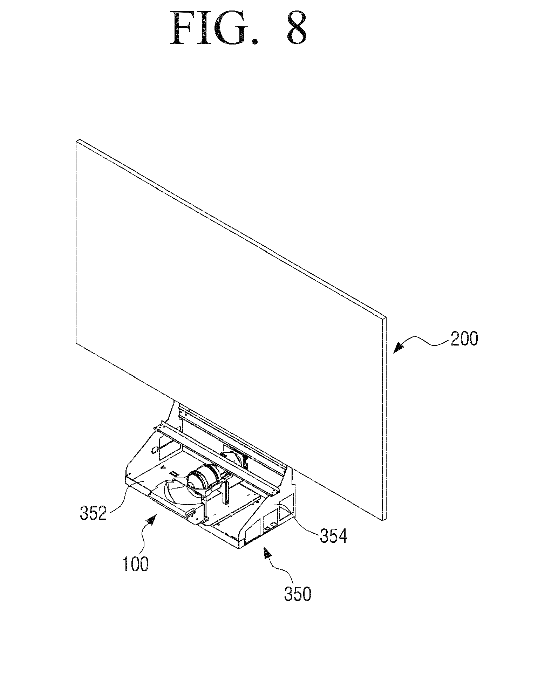

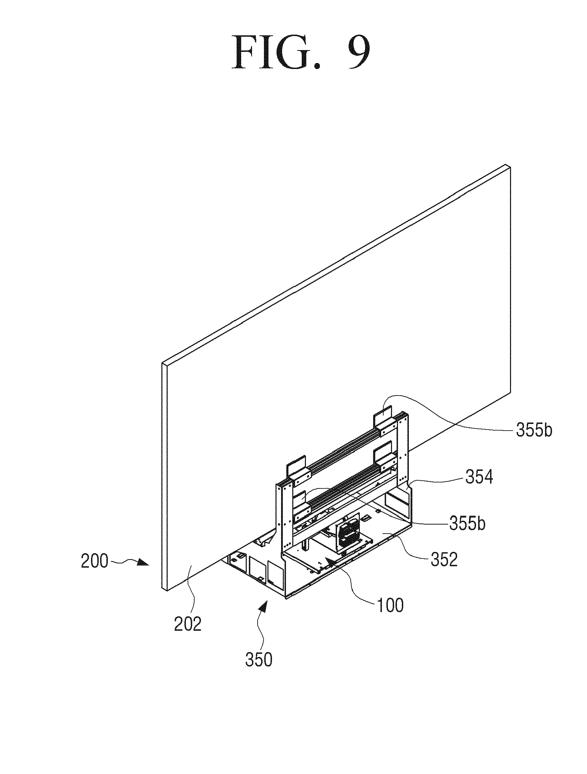

FIGS. 8 and 9 are views schematically illustrating an image projection unit and the screen unit mounted on the mounting bracket of FIG. 7.

Referring to FIG. 8, the image projection unit 100 is mounted on the first mounting part 352 of the mounting bracket 350 and the screen unit 200 is mounted on the second mounting part 354 of the mounting bracket 350. That is, the image projection unit 100 and the screen unit 200 are mounted together on the mounting bracket 350.

Referring to FIG. 9, the screen unit 200 is mounted on the four mounting plates 355b of the second mounting part 354 in the rear surface 200 of the rear plate (see 264 of FIG. 4). The rear surface 202 of the screen unit 200 is attached to the four mounting plates 355b through an adhesive, but this is not limited thereto. The screen unit 200 may be mounted on the second mounting part 354 through screw coupling using a screw and the like or through other types of mounting methods which can fix the screen unit to the second mounting part.

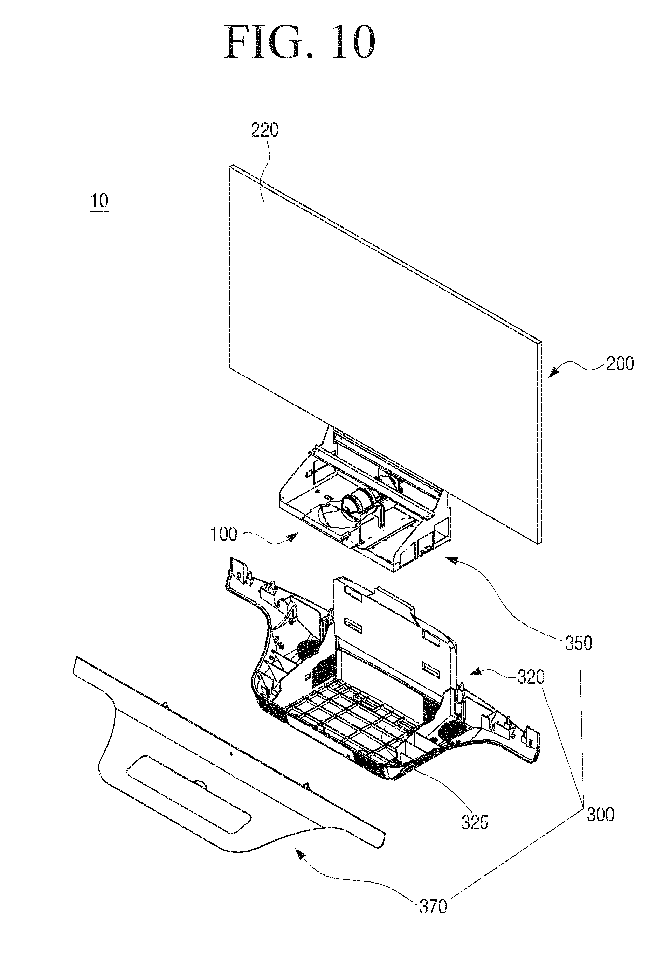

FIG. 10 is a view schematically illustrating the mounting bracket of FIGS. 8 and 9, which is to be mounted on a base frame.

Referring to FIG. 10, when the image projection unit 100 and the screen unit 200 are mounted on the mounting bracket 350, the bracket 350 is contained in the base frame 320. A bracket container 325, in which the mounting bracket 350 is to be contained, is provided in the base frame 320. When the mounting bracket 350 is contained in the base frame, the cover frame 370 covers the base frame 320.

In the projection apparatus 10 according to the exemplary embodiment, the image projection unit 100 and the screen unit 200 are contained together in one mounting unit 300 so that the screen 220 is not separated from the image projection unit 100 and disposed on the mounting unit 300 on which the image projection unit 100 is mounted.

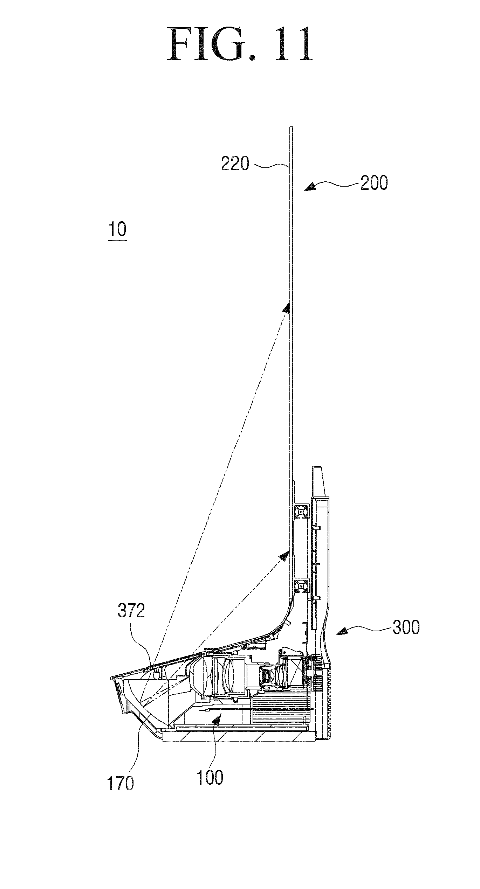

FIG. 11 is a cross-sectional view schematically illustrating the projection apparatus of FIG. 1.

Referring to FIG. 11, an image indicated by an arrow is magnified and projected from the image projection unit 100 and then displayed through the screen 220 of the screen unit 200 via the aspheric mirror 170 and the opening 372.

In the projection apparatus 100 according to the exemplary embodiment, since the image projection unit 100 and the screen unit 200 are stably fixed through the mounting unit 300, it is unnecessary for the user to adjust the position of the image projection unit 100 or screen 220 when watching the image through the projection apparatus 10. The arrangement of the image projection unit 100 and the screen unit 200 in the mounting unit 300 may be suitably changed according to the shape or type of the image projection unit and the size of the screen in the screen unit.

According to the above-described exemplary embodiments, an integrated projection apparatus, which is thin and lightweight, can be implemented.

The foregoing exemplary embodiments are merely exemplary and are not to be construed as limiting the present invention. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. A screen unit which displays an image projected from an image projection unit, the screen unit comprising:
a screen configured to display an image; and
a screen attaching part to which the screen is attached,
wherein the screen attaching part includes:
a front plate to which the screen is attached;
a rear plate disposed in a rear of the front plate; and
a strength reinforcing member disposed between the front plate and the rear plate.

2. A projection apparatus in which a screen unit claimed in claim 1 and an image projection unit are integrally mounted on one mounting unit.

3. The projection apparatus as claimed in claim 2, wherein the strength reinforcing member has a honeycomb shape in which a plurality of cells are formed.

4. The projection apparatus as claimed in claim 3, wherein each of the plurality of cells has a hexagonal pillar shape.

5. The projection apparatus as claimed in claim 2, wherein the strength reinforcing member has a wave shape.

6. The projection apparatus as claimed in claim 2, wherein the strength reinforcing member has an egg carton shape.

7. The projection apparatus as claimed in claim 2, wherein the mounting unit includes:
a base frame;
a mounting bracket provided inside the base frame and on which the image projection unit and the screen unit are mounted; and
a cover frame covering the base frame.

8. The projection apparatus as claimed in claim 7, wherein the mounting bracket includes:
a first mounting part on which the image projection unit is mounted; and
a second mounting part on which the screen unit is mounted.

9. The projection apparatus as claimed in claim 8, wherein the second mounting part is disposed to be perpendicular to the first mounting part.

10. The projection apparatus as claimed in claim 8, wherein the screen unit is adhered to the second mounting part in a rear surface of the rear plate through an adhesive.

11. The projection apparatus as claimed in claim 2, wherein the screen is a curved screen.

12. The projection apparatus as claimed in claim 11, wherein the curved screen is formed curvedly in at least one direction of horizontal direction and vertical direction.

13. The projection apparatus as claimed in claim 2, wherein the screen is adhered to the screen attaching part in a laminated manner.

14. The projection apparatus as claimed in claim 2, wherein the strength reinforcing member is fabricated of aluminium (Al).
